# EUROPÄISCHE PATENTSCHRIFT

(11) **EP 4 128 102 B1**
(45) Veröffentlichungstag und Bekanntmachung des Hinweises auf die Patenterteilung: **24.12.2025**
(21) Anmeldenummer: 21728519.6
(22) Anmeldetag: 21.05.2021
(51) Int. Cl.: G06Q 10/08

(54) **LOGISTIKTRANSPORTER UND AUFBAU FÜR EIN BAUSTELLENLOGISTIKSYSTEM**
LOGISTICS TRANSPORTER AND CONSTRUCTION FOR A CONSTRUCTION SITE LOGISTICS SYSTEM
TRANSPORTEUR LOGISTIQUE ET CONSTRUCTION POUR UN SYSTÈME LOGISTIQUE DE CHANTIER

(30) Priorität: 22.05.2020 DE 102020113811
(43) Veröffentlichungstag der Anmeldung: 08.02.2023
(73) Patentinhaber: Liebherr-Werk Biberach GmbH, 88400 Biberach an der Riss (DE)
(72) Erfinder: HESSELBEIN, Thorsten, 88441 Mittelbiberach (DE); SCHOLZ, Tobias, 88400 Biberach (DE)
(74) Vertreter: Lorenz Seidler Gossel Part. mbB
(86) Internationale Anmeldenummer: PCT/EP2021/063716
(87) Internationale Veröffentlichungsnummer: WO 2021/234170

(56) Entgegenhaltungen:
- WO-A1-2019/187820
- CN-A- 110 696 709
- DE-A1- 102013 016 118
- DE-A1- 102015 015 864
- DE-A1- 102015 224 468
- DE-A1- 4 321 605
- KR-B1- 100 891 153
- US-A1- 2017 353 943
- US-A1- 2020 026 281

## Beschreibung

Die Erfindung betrifft einen Logistiktransporter für ein Baustellenlogistiksystem zum automatischen Transport von Baustoffen und/oder Baustellenausrüstung auf einer Baustelle.

Auf Großbaustellen müssen Baustoffe sowie Bauausrüstung oftmals zwischen verschiedenen Einsatzorten hin und her transportiert werden. Ein Beispiel ist der Transport der Baustoffe und der Bauausrüstung vom Anlieferungsort der Baustelle bis zum Einsatzort am Bauwerk. Ein solcher Transport erfolgt bislang manuell durch geeignete Transportfahrzeuge wie Bagger, LKWs oder auch Hubgeräte. Eine Nachverfolgungsmöglichkeit des Transportes auf der Baustelle sowie die nachfolgende Verwendung der Baustoffe und Bauausrüstung ist bisher nicht umgesetzt und mit den bislang verfügbaren Mitteln technisch nur schwer umsetzbar.

Ein Logistiktransporter ist aus der US-Patentanmeldung US 2017/0353943 A1 bekannt.

Die vorliegende Anmeldung sucht daher nach Optimierungsmöglichkeiten für den vorgenannten Aufgabenbereich, insbesondere was den logistischen Transport von Baustoffen und Baustellenausrüstung zwischen unterschiedlichen Bereichen auf der Baustelle angeht.

Gelöst wird diese Aufgabe durch einen Logistiktransporter gemäß den Merkmalen des Anspruchs 1. Vorteilhafte Ausführungen des Logistiktransporters sind Gegenstand der abhängigen Ansprüche. Zudem betrifft die Erfindung ebenfalls einen Aufbau für die Lagerung etwaiger Baustoffe und/oder Baustellenausrüstung, der mittels des Logistiktransporters transportierbar ist. Zuletzt betrifft die Erfindung ebenso ein Baustellenlogistiksystem umfassend eine Vielzahl an Logistiktransportern und Aufbauten, die mittels einer Systemsteuerung auf der Baustelle koordiniert werden sollen.

Erfindungsgemäß wird ein Logistiktransporter vorgeschlagen, der aus einem selbstfahrendem Grundgerüst mit Fahrwerk besteht. Das Fahrwerk des Grundgerüstes ist idealerweise elektrisch betrieben, anderweitige Antriebsvarianten sind jedoch ebenso denkbar. Zudem umfasst das Grundgerüst eine Steuerung, die einen autonomen Fahrbetrieb des Grundgerüstes auf dem Baustellengelände oder zu einem anderen Ort in der Lieferkette zulässt. Der autonome Fahrbetrieb des Grundgerüstes kann vollständig durch die integrale Steuerung des Grundgerüstes ermöglicht sein, denkbar ist jedoch auch eine verteilte Anwendung, bei dieser die integrale Steuerung des Grundgerüstes mit wenigstens einem externen Server interagiert. Ebenso kann die Fahrsteuerung des Grundgerätes auch vollständig auf dem externen Server ausgelagert sein.

Das Grundgerüst umfasst wenigstens ein Kommunikationsmodul zur idealerweise bidirektionalen Kommunikation mit einem Baustellenlogistiksystem, das optional den externen Steuerserver beinhalten kann. Das Kommunikationsmodul dient zum Austausch etwaiger Transportaufgaben sowie gegebenenfalls von Steuerinformationen für den autonomen Fahrbetrieb.

Weiter erfindungsgemäß umfasst das Grundgerüst wenigstens eine Aufnahme mit Verbindungsmitteln zur wechselbaren Aufnahme und Befestigung wenigstens eines zur Lagerung von Baustoffen und/oder Bauausrüstung geeigneten Aufbaus. Durch diese Maßnahme lässt sich das Grundgerüst mit unterschiedlichen Aufbauarten bestücken, was das Grundgerüst universell für unterschiedlichen Transportaufgaben oder alternative Aufgaben einsetzbar macht. Neben unterschiedlichen Baustoffen ist auch der Transport von Bauausrüstung möglich. Vorgesehen kann beispielsweise sein, dass an geeigneten Beladestationen entsprechende Aufbauten bereitgehalten werden, die dann nur noch durch das Grundgerüst aufgenommen und an die Zielposition verfahren werden müssen. An einer solchen Zielposition können die Aufbauten dann entgegen genommen und das Grundgerüst für den nächsten Transportauftrag freigestellt werden. Die Beladestation muss nicht auf der Baustelle sein, denkbar ist auch, dass die Beladestation bei einem Zulieferer oder auf dem Lagerplatz des Bauunternehmens ist und schon der Antransport auf die Baustelle auf dem Aufbau erfolgt. Dadurch ist ein durchgängiger Transport vom z.B. Zulieferer zum Einbauort auf der Baustelle ohne Umladen der Güter möglich.

Idealerweise sind etwaige Verbindungsmittel im Bereich der Aufnahmefläche des Grundgerüstes vorgesehen, die mittels einer Steuerung automatisch geöffnet bzw. geschlossen werden können. Besonders bevorzugt ist die Ausführung der Verbindungsmittel als Schnellverschlusssystem, sodass ein möglichst schneller und unkomplizierter Austausch bzw. entsprechende Aufnahme eines solchen Aufbaus möglich ist.

Vor diesem Hintergrund kann es ebenso vorteilhaft sein, wenn das Fahrwerk des Grundgerüstes mit einer Absenkautomatik ausgestattet ist, um das Fahrwerk bzw. die Aufnahmefläche des Grundgerüstes in Vertikalrichtung abzusenken. Mit reduzierter Höhe kann das Grundgerüst dann selbstständig unter den gewünschten Aufbau verfahren werden. Durch anschließendes Anheben des Fahrwerkes bzw. der Aufnahmefläche kann der unterfahrene Aufbau automatisch aufgenommen werden. Idealerweise schließt das Schnellverschlusssystem in diesem Zusammenhang selbsttätig.

Ferner kann vorgesehen sein, dass am Grundgerüst wenigstens ein Lesegerät installiert ist, um ein am Aufbau vorgehaltenes Identifikationsmerkmal zu erkennen und gegebenenfalls zu analysieren. Durch diese Maßnahme kann das Grundgerüst den aufgenommenen Aufbau eindeutig identifizieren. Ein solches Identifikationsmerkmal ist beispielsweise ein geeigneter Code, der sichtbar am Aufbau angebracht ist. Alternativ dazu ist auch ein elektronisches Auslesen eines am Aufbau vorgehaltenen Datenspeichers. Der Speicher kann dann noch weitere Informationen beinhalten, bspw. Art und Menge des aufgenommenen Ladegutes.

Das Grundgerüst kann weiterhin eine entsprechende Sensorik zur Umfelderkennung verfügen, um dadurch ein autonomes Verfahren des Grundgerüstes zu ermöglichen. Die Sensorik kann optisch arbeiten. Andere Sensortypen sind ebenso denkbar.

Neben der erfindungsgemäßen Logistikeinheit betrifft die vorliegende Erfindung auch einen entsprechenden Aufbau, der geeignet ist, durch den erfindungsgemäßen Logistiktransporter aufgenommen zu werden. Ein solcher Aufbau kann beispielsweise mit einer Ladefläche zur Aufnahme von unterschiedlichen Baustoffen und/oder Bauausrüstung versehen sein. Denkbar ist es ebenso, dass ein entsprechender Aufbau mit einer Handlingseinheit, wie bspw. einem Roboter versehen ist, um am Zielort unterschiedliche Aufgaben zu übernehmen. Der Aufbau kann auch mit einem Mess- und/oder Sensorsystem ausgestattet sein, um am Zielort unterschiedliche Messaufgaben übernehmen zu können. Ein prominentes Beispiel hierfür ist die Baufortschrittsüberwachung. Der Aufbau mit einer dazu geeigneten Mess- und Sensoreinheit wird in den Bereich des zu prüfenden Bauwerkes verfahren. Die erzeugten Mess- und Sensordaten können mittels des Kommunikationsmoduls an das Baustellenlogistiksystem oder einen sonstigen Server übertragen werden.

Dient der Aufbau für den Transport von Baustoffen und/oder Bauausrüstung kann es vorzugsweise vorgesehen sein, den Aufbau zusätzlich um ein integrales Be- und Entlademittel zu ergänzen, beispielsweise in Form eines Ladekrans. Dadurch kann der Aufbau Baumaterialien oder Ausrüstung selbsttätig ohne fremde Hilfsmittel aufnehmen und/oder abladen.

Vorstehend wurde bereits erläutert, dass der Logistiktransporter mit einer entsprechenden Absenkautomatik versehen sein kann. Alternativ dazu oder auch ergänzend kann der Aufbau einen geeigneten Mechanismus für eine Vertikalbewegung des Aufbaus aufweisen. Vorstellbar ist hier eine am Aufbau installierte Abstützeinrichtung, insbesondere in Form von ausfahrbaren bzw. teleskopierbaren Abstützfüßen, wodurch sich die Grundfläche des Aufbaus in Vertikalrichtung anheben und von dem Logistiktransporter unterfahren lässt.

Sinnvollerweise kann der Aufbau auch mit einer verschließbaren Ladefläche ausgestattet sein, sodass Bauausrüstung oder auch Baustoffe im Sinne eines Logistikspeichers für einen längeren Zeitraum sicher auf dem Aufbau aufbewahrt werden können. Die verschließbare Ladefläche kann beispielsweise ein abschließbarer Laderaum sein, bspw. ein Container, der den Inhalt nicht nur vor unberechtigtem Zutritt schützt, sondern ebenso einen zusätzlichen Schutz vor äusseren Umwelteinflüssen bietet. Alternativ zum verschließbaren Laderaum können natürlich auch etwaige Sicherungsmittel zur Fixierung und abschließbaren Sicherung aufgenommener Baustoffe und/oder Bauausrüstung vorgesehen sein.

Der Aufbau kann, wie bereits vorstehend anhand des Logistiktransporters angedeutet, wenigstens ein Identifikationsmerkmal aufweisen, das mittels eines geeigneten Lesegerätes erkennbar bzw. auslesbar ist. Ebenso kann der Aufbau einen Informationsspeicher umfassen, in dem etwaige Informationen zur Identifizierung des Aufbaus als auch zusätzliche Informationen, bspw. über die Art und Menge des Ladegutes, Zielortes, usw. hinterlegt sein können.

Ebenso kann der Aufbau mit einer Sensorik zur Erkennung und/oder Identifizierung des Ladegutes ausgestattet sein. Eine entsprechende Sensorik kann beispielsweise ein Kamerasystem sein. Denkbar ist es auch, dass mittels der Sensorik nicht nur die Art und Umfang des Ladegutes, sondern vielmehr Änderungen des Beladungszustandes automatisch erkannt werden können. Vorstellbar ist es, dass erfasste Informationen über ein Kommunikationsmodul an ein Baustellensystem gesendet werden können und/oder im vorgesehenen Informationsspeicher hinterlegt werden.

Die Erfindung betrifft ebenso eine Kombination aus einem Logistiktransporter und wenigstens einem Aufbau gemäß der Erfindung.

Die vorstehenden Ausführungen des Logistiktransporters als auch des Aufbaus sind notwendige Voraussetzungen für den Aufbau eines erfindungsgemäßen Baustellenlogistiksystems, das sich aus wenigstens einem Logistiktransporter sowie wenigstens einem Aufbau gemäß der Erfindung zusammensetzt. Ergänzend ist das Baustellenlogistiksystem um einen zentralen Steuerserver erweitert, der kommunikativ mit den Logistiktransportern und/oder den Aufbauten in Verbindung steht und zur Koordination der Systemteile auf der Baustelle dient. Der Server kann auch durch eine cloudbasierte Lösung realisiert sein.

Beispielsweise ist ein solcher Server konfiguriert, den Transporteinheiten offene Transportaufträge kommunikativ zu übermitteln, die diese dann entsprechend abarbeiten. Dabei kann der Server die Transporteinheiten zudem beim autonomen Verfahren auf der Baustelle unterstützen, indem entsprechende Verfahrwege vorgegeben werden. Auch kann eine entsprechende Bildverarbeitung, die für das autonome Verfahren möglicherweise notwendig ist, alternativ auf den Server ausgelagert sein.

Bevorzugt ist der Server konfiguriert, entsprechende Transportaufträge zu übermitteln, die einerseits Informationen über die benötigte Aufbauart als auch die entsprechende Beladestation für die Aufnahme des Aufbaus beziehungsweise der zu transportierenden Baustoffe oder Bauausrüstung enthält. Anhand dieser Aufträge können die Logistiktransporter automatisch die entsprechenden Positionen auf der Baustelle ansteuern und zunächst den passenden Aufbau als auch dann die Beladestation zur Aufnahme der gewünschten Güter ansteuern. Zuletzt werden die Logistiktransporter automatisch an die gewünschte Zielposition verfahren.

Das Baustellenlogistiksystem kann zusätzlich ein oder mehrere Schnittstellen aufweisen, um die Verbindung und Integration in bestehende Baustellensysteme zu ermöglichen, um somit eine vollständige Kette für die Logistik über die Grenzen des Baustellengeländes hinausgehend umsetzen zu können.

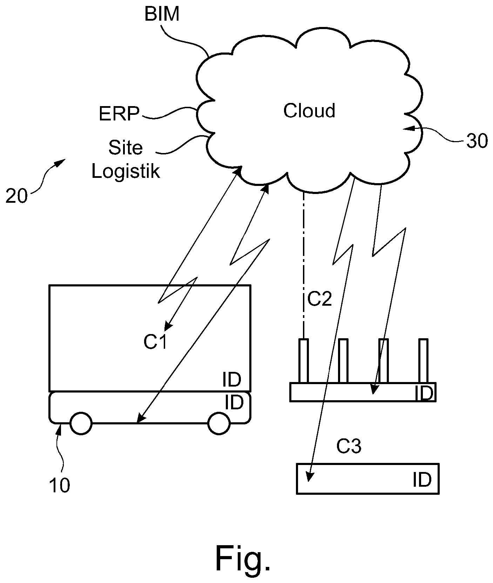

Weitere Vorteile und Eigenschaften der Erfindung sollen nachfolgend anhand eines in der Figur dargestellten Ausführungsbeispiels erläutert werden. Die einzige Figur skizziert kurz den Aufbau eines solchen Baustellenlogistiksystems.

Kernkomponente des Baustellenlogistiksystems sind die einzelne Logistiktransporter 10, die mit einem entsprechenden Fahrwerk zum autonomen Verfahren auf der Baustelle ausgeführt sind. Die Transporter 10 umfassen zusätzlich eine Aufnahmefläche, auf der unterschiedliche Aufbauten C1, C2, C3 aufgenommen werden können. Der Aufbau C1 ist bspw. in Form eines Containers mit Laderaum ausgeführt. Der Aufbau C2 weist eine Ladefläche mit Vertikalpfosten auf, während der Aufbau C3 eine einfache Ladeebene zeigt. Mittels der Aufbauten C1, C2, C3 können unterschiedliche Baustoffe, wie beispielsweise Steine, Gipsplatten, Leichtbauwände etc. aufgenommen und transportiert werden. Ebenso können manche Aufbauten C1, C2, C3 zur Aufnahme von passendem Bauequipment, wie beispielsweise Stützen, Schalungen und sonstige Kleinteile geeignet sein. Denkbar sind auch Aufbauten, die weniger zum Gütertransport dienen, sondern stattdessen mit einer Handlingsmaschine oder Sensorik zur Baufortschrittsüberwachung ausgestattet sind. Grundsätzlich sind beliebige viele unterschiedliche Aufbauten für unterschiedliche Zwecke denkbar.

Die Befestigung der Aufbauten C1, C2 und C3 auf dem Transporter 10 erfolgt mittels eines Schnellverschlusssystems. Wenigstens ein Teil der Aufbauten C1, C2, C3 umfasst Abstützfüße, mittels denen der Aufbau in Vertikalrichtung soweit angehoben werden kann, dass der Logistiktransporter 10 diesen unterfahren kann. Auch die Logistiktransporter 10 können eine Absenkautomatik verfügen, um ihre Aufnahmefläche für die Aufbauten abzusenken und die Aufbauten C1, C2, C3 unterfahren zu können.

Die Logistiktransporter 10 als auch die einzelnen Aufbauten C1, C2, C3 können über eine Funkschnittstelle mit einem zentralen Logistiksystem 20 vernetzt sein, was im hier dargestellten Ausführungsbeispiel über eine cloud-basierte Lösung (Cloud 30) realisiert ist. Über Softwareschnittstellen kann das Baustellenlogistiksystem auch in bestehende Lösungen wie BIM oder ERP integriert werden.

Auf der Baustelle sind nun unterschiedliche Belade- und Entladestationen verfügbar, die automatisiert durch die Logistiktransporter 10 anfahrbar sind. An den entsprechenden Be- und Entladestellen können passende Aufbauten C1, C2, C3 aufgenommen werden, die bereits vorab mit entsprechenden Transportgütern bestückt worden sind. Alternativ dazu kann der Logistiktransporter 10 auch einen leeren Aufbau aufnehmen und im Anschluss eine Beladestation anfahren, um die für den Aufbautyp geeigneten Transportgüter aufzunehmen.

Die aufgenommenen Transportgüter beziehungsweise das Equipment wird dann autonom durch den Logistiktransporter 10 an die gewünschte Zielposition verfahren. Bei Hochbaustellen kann eine solche Zielposition ein sogenannter Common Tower sein, der ein oder mehrere Aufzugspodeste für den weiteren Vertikaltransport der Ladegüter aufweist.

Die Vorteile eines solchen Systems sind die Folgenden:
- Kombination von horizontalem und vertikalem Transport in Verbindung mit einem vertikalen Fördersystem (Baustellenaufzug)
- selbstständiges Fahren in einem sich verändernden Umfeld
- Übernahme von Scanfunktionen zur Baufortschrittsüberwachung
- Logistikoptimierung für Warenanlieferung am Einbau beziehungsweise Nutzungsort
- Integration von BIM/ERP/site logistic Daten
- System dient auch zum Quertransport auf einer Ebene
- Schwarmsystemfähigkeit zur Erhöhung der Traglasten

## Patentansprüche

1. Logistiktransporter für ein Baustellenlogistiksystem zum automatischen Transport von Baustoffen und/oder Baustellenausrüstung auf einer Baustelle oder von / zu einem anderen Ort in der Lieferkette umfassend wenigstens ein selbstfahrendes Grundgerüst mit Fahrwerk und ein Kommunikationsmodul zur Kommunikation mit einem Baustellenlogistiksystem,
**dadurch gekennzeichnet,**
**dass** das Grundgerüst wenigstens eine Aufnahme mit Verbindungsmitteln zur wechselbaren Aufnahme und Befestigung wenigstens eines zur Lagerung von Baustoffen und/oder Bauausrüstung geeigneten Aufbaus aufweist.

2. Logistiktransporter nach Anspruch 1, **dadurch gekennzeichnet, dass** als Verbindungsmittel ein Schnellverschlusssystem vorgesehen ist, wobei das Verschlusssystem vorzugsweise durch eine Steuerung des Grundgerüstes automatisiert schliess- und/oder öffenbar ist.

3. Logistiktransport nach einem der vorstehenden Ansprüche, **dadurch gekennzeichnet, dass** das Fahrwerk des Grundgerüstes eine Absenkautomatik aufweist, um mittels einer Vertikalbewegung des Grundgerüstes ein selbständiges Aufnehmen und/oder Absetzen des Aufbaus zu ermöglichen.

4. Logistiktransporter nach einem der vorstehenden Ansprüche, **dadurch gekennzeichnet, dass** ein Lesegerät am Grundgerüst installiert ist, um ein am Aufbau vorgehaltenes Identifikationsmerkmal zu erkennen und/oder eine gespeicherte Information auszulesen.

5. Logistiktransporter nach einem der vorstehenden Ansprüche, **dadurch gekennzeichnet, dass** das Grundgerüst über eine Sensorik zur Umfelderkennung verfügt.

6. Aufbau für einen Logistiktransporter nach einem der vorstehenden Ansprüche, **dadurch gekennzeichnet, dass** der Aufbau wenigstens eine Ladefläche zur Aufnahme von Baustoffen bzw. Bauausrüstung aufweist und/oder mit einer Handlingseinheit wie einem Roboter und/oder einer Meßanlage bzw. Scanner zur Baufortschrittsüberwachung ausgestattet ist.

7. Aufbau nach Anspruch 6, **dadurch gekennzeichnet, dass** der Aufbau ein eigenes Be- und Entlademittel, bspw. einen Ladekran, aufweist.

8. Aufbau nach Anspruch 6 oder 7, **dadurch gekennzeichnet, dass** der wenigstens eine Aufbau mit einer Abstützeinrichtung, insbesondere in Form von ausfahrbaren Abstützfüßen ausgeführt ist, deren erzeugte Vertikalbewegung des Aufbaus ein selbständiges Auf- und Ablegen des Aufbaus auf der Aufnahmefläche des Grundgerüstes ermöglicht.

9. Aufbau nach einem der vorstehenden Ansprüche 6 bis 8, **dadurch gekennzeichnet, dass** der wenigstens eine Aufbau eine verschliessbare Ladefläche umfasst und/oder mit Sicherungsmittel zur Sicherung aufgenommener Baustoffe und/oder Bauausrüstung ausgestattet ist.

10. Aufbau nach einem der vorstehenden Ansprüche 6 bis 9, **dadurch gekennzeichnet, dass** der Aufbau wenigstens ein Identifikationsmerkmal aufweist oder einen mittels Lesegerät auslesbaren Informationsspeicher mit gespeicherter Identifikationsinformationen, insbesondere Informationen zur Art des Aufbaus und/oder des Ladegutes aufweist.

11. Aufbau nach einem der Ansprüche 6 bis 10, **dadurch gekennzeichnet, dass** eine Sensorik zur Erkennung und/oder Identifizierung der Ladegutes und/oder zur Erkennung von Änderungen der Beladung installiert ist.

12. Einheit aus einem Logistiktransporter nach einem der vorstehenden Ansprüche 1 bis 5 sowie wenigstens einem Aufbau nach einem der Ansprüche 6 bis 11.

13. Baustellenlogistiksystem umfassend wenigstens einen Logistiktransporter nach einem der Ansprüche 1 bis 5 und wenigstens einen Aufbau nach einem der Ansprüche 6 bis 11 sowie einen Steuerserver zur Koordination der Logistiktransporter, wobei der Server kommunikativ mit dem wenigstens einen Logistiktransporter und/oder dem wenigstens einen Aufbau in Verbindung steht.

14. Baustellenlogistiksystem nach Anspruch 13, **dadurch gekennzeichnet, dass** der Server konfiguriert ist, den Logistiktransportern offene Transportaufträge zu übermitteln, wobei die Aufträge Informationen über die benötigte Aufbauart und/oder die entsprechende Beladestation für die Aufnahme des Aufbaus bzw. die Beladung des Aufbaus sowie die Entladestelle beinhalten.

15. Baustellenlogistiksystem nach einem der Ansprüche 13 bis 14, **dadurch gekennzeichnet, dass** das Baustellenlogistiksystem eine Schnittstelle zu wenigstens einem weiteren elektronischen Baustellensystem aufweist.

## Claims

1. A logistics transporter for a construction site logistics system for the automatic transport of construction materials and/or construction site equipment on a construction site or from/to another location of the supply chain, comprising at least one self-propelled chassis with running gear and a communication module for communicating with a construction site logistics system,
**characterized in that**
the chassis has at least one receptacle with coupling means for interchangeably receiving and fastening at least one superstructure suitable for storing construction materials and/or construction site equipment.

2. The logistics transporter according to claim 1, **characterized in that** a quick-release system is provided as the coupling means, the quick-release system being capable of being closed and/or opened in an automated manner, preferably by a controller of the chassis.

3. The logistics transporter according to any one of the preceding claims, **characterized in that** the running gear of the chassis comprises an automatic lowering system in order to enable autonomous receiving and/or depositing of the superstructure by means of a vertical movement of the chassis.

4. The logistics transporter according to any one of the preceding claims, **characterized in that** a reader is installed on the chassis in order to recognize an identification feature provided on the superstructure and/or to read stored information.

5. The logistics transporter according to any one of the preceding claims, **characterized in that** the chassis comprises a sensor system for detecting the surroundings.

6. A superstructure for a logistics transporter according to any one of the preceding claims, **characterized in that** the superstructure has at least one loading surface for receiving construction materials or construction site equipment and/or is equipped with a handling unit such as a robot and/or with a measuring device or a scanner for monitoring construction progress.

7. The superstructure according to claim 6, **characterized in that** the superstructure has its own loading and unloading means, for example a loading crane.

8. The superstructure according to claim 6 or 7, **characterized in that** the at least one superstructure is designed with a supporting device, in particular in the form of extendable support legs, the vertical movement generated by which enables autonomous mounting and dismounting of the superstructure on the receiving surface of the chassis.

9. The superstructure according to any one of claims 6 to 8, **characterized in that** the at least one superstructure comprises a lockable loading surface and/or is equipped with securing means for securing the received construction materials and/or construction site equipment.

10. The superstructure according to any one of claims 6 to 9, **characterized in that** the superstructure comprises at least one identification feature or an information memory readable by means of a reader, with stored identification information, in particular information about the type of superstructure and/or the loaded product.

11. The superstructure according to any one of claims 6 to 10, **characterized in that** a sensor system is installed for detecting and/or identifying the loaded product and/or for detecting changes in the load.

12. A unit comprising a logistics transporter according to any one of claims 1 to 5 and at least one superstructure according to any one of claims 6 to 11.

13. A construction site logistics system comprising at least one logistics transporter according to any one of claims 1 to 5 and at least one superstructure according to any one of claims 6 to 11, as well as a control server for coordinating the logistics transporters, the server being in communication with the at least one logistics transporter and/or the at least one superstructure.

14. The construction site logistics system according to claim 13, **characterized in that** the server is configured to transmit open transport orders to the logistics transporters, the orders containing information about the required type of superstructure and/or the corresponding loading station for receiving or loading the superstructure, as well as the unloading location.

15. The construction site logistics system according to any one of claims 13 or 14, **characterized in that** the construction site logistics system has an interface with at least one other electronic construction site system.

## Revendications

1. Transporteur logistique pour un système logistique de chantier pour le transport automatique de matériaux de construction et/ou d'équipements de chantier sur un chantier ou depuis/vers un autre lieu de la chaîne d'approvisionnement, comprenant au moins un châssis automoteur avec train de roulement et un module de communication pour communiquer avec un système logistique de chantier,
**caractérisé en ce que**
le châssis présente au moins un réceptacle avec des moyens de liaison pour recevoir et fixer de manière interchangeable au moins une superstructure appropriée pour le stockage de matériaux de construction et/ou d'équipements de construction.

2. Transporteur logistique selon la revendication 1, **caractérisé en ce qu'**un système de fermeture rapide est prévu en tant que moyen de liaison, le système de fermeture pouvant être fermé et/ou ouvert de manière automatisée, de préférence par une commande du châssis.

3. Transporteur logistique selon l'une quelconque des revendications précédentes, **caractérisé en ce que** le train de roulement du châssis présente un système d'abaissement automatique afin de permettre une réception et/ou un dépôt autonome de la superstructure au moyen d'un mouvement vertical du châssis.

4. Transporteur logistique selon l'une quelconque des revendications précédentes, **caractérisé en ce qu'**un lecteur est installé sur le châssis afin de reconnaître une caractéristique d'identification tenue à disposition sur la superstructure et/ou de lire une information enregistrée.

5. Transporteur logistique selon l'une quelconque des revendications précédentes, **caractérisé en ce que** le châssis dispose d'un système de capteur pour la détection de l'environnement.

6. Superstructure pour un transporteur logistique selon l'une quelconque des revendications précédentes, **caractérisée en ce que** la superstructure présente au moins une surface de chargement pour recevoir des matériaux de construction ou des équipements de construction et/ou est équipée d'une unité de manutention telle qu'un robot et/ou d'une installation de mesure ou d'un scanner pour surveiller l'avancement des travaux.

7. Superstructure selon la revendication 6, **caractérisée en ce que** la superstructure présente son propre moyen de chargement et de déchargement, par exemple une grue de chargement.

8. Superstructure selon la revendication 6 ou 7, **caractérisée en ce que** l'au moins une superstructure est conçue avec un dispositif de support, notamment sous la forme de pieds de support extensibles, dont le mouvement vertical généré de la superstructure permet un montage et un démontage autonomes de la superstructure sur la surface de réception du châssis.

9. Superstructure selon l'une quelconque des revendications 6 à 8 précédentes, **caractérisée en ce que** l'au moins une superstructure comprend une surface de chargement verrouillable et/ou est équipée de moyens de sécurisation pour sécuriser les matériaux de construction et/ou les équipements de construction reçus.

10. Superstructure selon l'une quelconque des revendications 6 à 9 précédentes, **caractérisée en ce que** la superstructure présente au moins une caractéristique d'identification ou une mémoire d'informations lisible au moyen d'un lecteur avec des informations d'identification enregistrées, notamment des informations sur le type de superstructure et/ou de produit chargé.

11. Superstructure selon l'une quelconque des revendications 6 à 10, **caractérisée en ce qu'**un système de capteur est installé pour détecter et/ou identifier le produit chargé et/ou pour détecter des changements du chargement.

12. Unité composée d'un transporteur logistique selon l'une quelconque des revendications 1 à 5 précédentes et d'au moins une superstructure selon l'une quelconque des revendications 6 à 11.

13. Système logistique de chantier comprenant au moins un transporteur logistique selon l'une quelconque des revendications 1 à 5 et au moins une superstructure selon l'une quelconque des revendications 6 à 11, ainsi qu'un serveur de commande pour la coordination des transporteurs logistiques, le serveur étant en communication avec l'au moins un transporteur logistique et/ou l'au moins une superstructure.

14. Système logistique de chantier selon la revendication 13, **caractérisé en ce que** le serveur est configuré pour transmettre aux transporteurs logistiques des ordres de transport ouverts, les ordres contenant des informations sur le type de superstructure requis et/ou la station de chargement correspondante pour la réception de la superstructure ou le chargement de la superstructure, ainsi que le lieu de déchargement.

15. Système logistique de chantier selon l'une quelconque des revendications 13 à 14, **caractérisé en ce que** le système logistique de chantier présente une interface avec au moins un autre système électronique de chantier.
